# EUROPEAN PATENT SPECIFICATION

(11) **EP 1 932 351 B1**
(45) Date of publication and mention of the grant of the patent: **26.02.2014**
(21) Application number: 06803645.8
(22) Date of filing: 15.09.2006
(51) Int. Cl.: H04N 7/18, B60R 1/04, B60R 1/08

(54) **REAR VIEW MIRROR WITH INTEGRATED VIDEO SYSTEM**
RÜCKSPIEGEL MIT INTEGRIERTEM VIDEOSYSTEM
RETROVISEUR EQUIPE D'UN SYSTEME VIDEO INTEGRE

(30) Priority: 16.09.2005 US 717602 P
(43) Date of publication of application: 18.06.2008
(73) Proprietor: Digital Ally, Inc., Leawood KS 66224 (US)
(72) Inventor: HALER, Robert D., Blue Springs, Missouri 64014 (US)
(74) Representative: Manasse, Uwe
(86) International application number: PCT/US2006/035934
(87) International publication number: WO 2007/035450

(56) References cited:
- WO-A1-01/23214
- WO-A1-02/49881
- WO-A1-03/049446
- GB-A- 2 351 055
- GB-A- 2 417 151
- JP-A- 10 076 880
- JP-A- 2005 119 631
- US-A- 5 111 289
- US-A- 5 978 017
- US-A1- 2002 032 510
- US-A1- 2002 044 065
- US-A1- 2002 044 065
- US-A1- 2002 131 768
- US-A1- 2004 145 457
- US-A1- 2005 134 966
- US-A1- 2006 164 220
- US-B1- 6 175 300
- US-B2- 6 326 900
- 'New Rearview-Mirror-Based Camera Display Takes the Guesswork Out of Backing Up' PRESS RELEASE, [Online] 30 October 2006, XP003030680 Retrieved from the Internet: <URL:http://www.news.thomasnet.com/fullstor y/497750>
- LILLIPUT RV18-50NP 5: 'Rear View Mirro TFT LCD Screen with Camera', [Online] 04 March 2005, Retrieved from the Internet: <URL:http://www.case-mod.com/lilliput-rv185 0onp-rear-view-mirro-tft-lcd-screen-with-ca mera-p-1272.html>
- 'Car Rear View Camera - Multimedia Rear View Mirror - 4' LCD color monitor', [Online] 09 February 2005, pages 1 - 3, XP003030681 Retrieved from the Internet: <URL:http://www.web.archive.org/web/2005020 9014751/http://laipac.com/multimedia-rear-m irror.htm>

## Description

### FIELD OF THE INVENTION

The present invention relates generally to surveillance equipment, such as vehicle-mounted video equipment. More specifically, the present invention concerns a vehicle-mounted video system that is capable of recording, storing, and replaying video images, wherein the video system includes at least one camera and a display monitor, with both being integrated into the same housing as a rear view mirror of the vehicle, and at least the monitor being located substantially behind the mirror such that video images displayed by the monitor are visible through the mirror. Such a mirror is described in US 2002/044065.

### BACKGROUND OF THE INVENTION

Many law enforcement vehicles currently include video systems for recording and displaying activity. Unfortunately, these systems typically consist of one or two cameras and an independent display monitor that is difficult to view while the vehicle is in operation. Moreover, the current systems are expensive, bulky, and difficult to operate and maintain. It is also difficult to find sufficient space for the camera, recording system, and monitor in the law enforcement vehicles which are already heavily loaded with extra equipment. It is possible to locate certain components, such as the recording system, which do not need to be frequently accessed, in the trunk of the vehicle, but this then requires long cables extending through the vehicle to connect the recording system with the camera and monitor. Additionally, many current systems are limited to simply recording and displaying visual images of the activity, and do not provide any additional information associated with the activity.

### BRIEF SUMMARY OF THE INVENTION

The present invention provides a video system that is capable of recording, storing, and replaying video images, wherein major portions of the video system are integrated into a rear view mirror housing of a vehicle. In one embodiment, the system broadly comprises the rear view mirror housing, the mirror mounted in the housing and disposed in the field of view of a driver of the vehicle, a video camera mounted in the housing, and a display monitor mounted in the housing substantially behind the mirror, wherein the mirror and the monitor are configured so that video images displayed by the monitor are viewable through the mirror when the monitor is activated. The system also includes control and recording electronics mounted in the housing, wherein the electronics are operable to record video images received from the camera and to transmit video images for display by the monitor.

In various embodiments, the video system may also include any one or more of the following features. An external camera mounted outside of the rear view mirror housing, wherein the control and recording electronics is further operable to record video images captured by the external camera. An internal microphone and a speaker mounted in the housing, with the electronics being operable to record audio signals received from the internal microphone and to transmit audio signals for play by the speaker. At least one infrared LED mounted in the housing for providing infrared illumination. A wireless microphone receiver for receiving electronic signals from a remotely located microphone, with the electronics being operable to record the electronic signals in conjunction with the video images. A computer readable memory for storing the video images and other data, wherein the memory can be removed from and reinstalled into the housing. A GPS device operable to determine location information, with the electronics being operable to record the location information in conjunction with the video images. A speed detector operable to provide speed information, with the electronics being operable to record the speed information in conjunction with the video images.

It is to be understood that the invention is not limited in its application to the details of construction and to the arrangements of the components set forth in the following description or illustrated in the drawings. The invention is capable of embodiments in addition to those described and of being practiced and carried out in various ways. As such, those skilled in the art will appreciate that the conception upon which this disclosure is based may readily be utilized as a basis for the designing of other structures, methods and systems for carrying out the several purposes of the present invention. Also, it is to be understood that the phraseology and terminology employed herein are for the purpose of description and should not be regarded as limiting.

### BRIEF DESCRIPTION OF THE DRAWINGS

Further features of the present invention will become apparent to those skilled in the art to which the present invention relates from reading the following description with reference to the accompanying drawings, in which:
Fig. 1 is a functional block diagram of a video system according to one embodiment of the present invention;
Fig. 2 is a perspective view of a rear view mirror constructed according to one embodiment of the present invention;
Fig. 3 is a perspective view of a rear view mirror constructed according to an embodiment of the present invention and illustrating an active monitor showing the image from a forward facing external camera mounted in close proximity to the rear view mirror;
Fig. 4 is a perspective view of the rear view mirror of Fig. 1;
Fig. 5 is a front elevation view of the rear view mirror of Fig. 1;
Fig. 6 is an side elevation view of the rear view mirror of Fig. 1;
Fig. 7 is a plan view of the rear view mirror of Fig.1;
Fig. 8 is a perspective view of a rear view mirror constructed according to another embodiment of the present invention;
Fig. 9 is a front elevation view of the rear view mirror of Fig. 8; and
Fig. 10 is a rear elevation view of the rear view mirror of FIG. 8.

### DETAILED DESCRIPTION OF THE INVENTION

With reference to the figures, a video system is herein described, shown, and otherwise disclosed in accordance with a preferred embodiment of the present invention. More specifically, the present invention provides a vehicle-mounted video system that is capable of recording, storing, and replaying video images, wherein the video system includes at least one camera and a display monitor, with both being integrated into the same housing as a rear view mirror of the vehicle, and with the monitor being located substantially behind the mirror such that video images displayed by the monitor are visible through the mirror. The video system may also allow for capturing audio signals and other desirable information, including, for example, location and speed information.

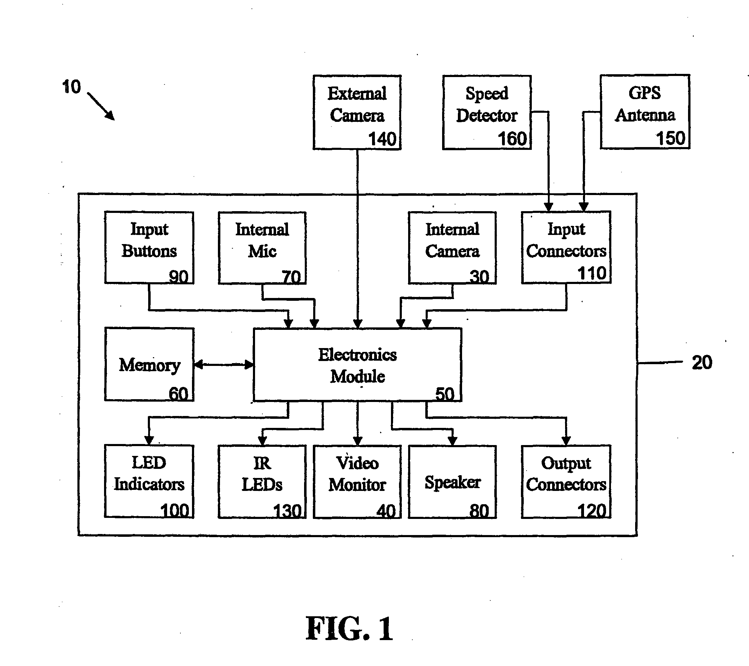

Referring to Fig.1, an embodiment of the video system 10 is shown broadly comprising various components mounted in or on the rear view mirror housing 20, including an internal camera 30, a video monitor 40, an electronics module 50, a memory 60, an internal microphone 70, a speaker 80, input buttons 90, LED indicators 100, input connectors 110, output connectors 120, and at least one infrared LED 130. The system 10 may also include an external camera 140, a GPS antenna 150, and a speed detector 160.

The internal camera 30 is typically positioned on an upper and central portion of the mirror housing 20 so that it can capture video images of activity within the passenger compartment of the vehicle. Alternatively, the internal camera 30 may be hidden behind the mirror 170. The internal camera 30 may be mounted at an appropriate angle, such as approximately between 10 degrees and 20 degrees to the left, so that the camera 30 is able to properly view the passenger compartment even when the mirror 170 is angled towards the driver during normal use. One appropriate camera for use as the internal camera 30 is a 510x492 black and white CMOS sensor with TV resolution, 0.01 Lux sensitivity, and a 140 degree 4-element coated glass lens.

The external camera 140 is mounted outside of the mirror housing 20 in a separate enclosure. The external camera 140 is useful, for example, to record video images when an officer leaves the vehicle, such as during a traffic stop. One appropriate camera for use as the external camera 140 is a color CCD sensor NTSC with 768x484 pixels and 470 lines of resolution, a 10X optical zoom and auto focus capabilities, a wide viewing angle that is from 50.7 to 5.4 degrees, and standard and low light modes.

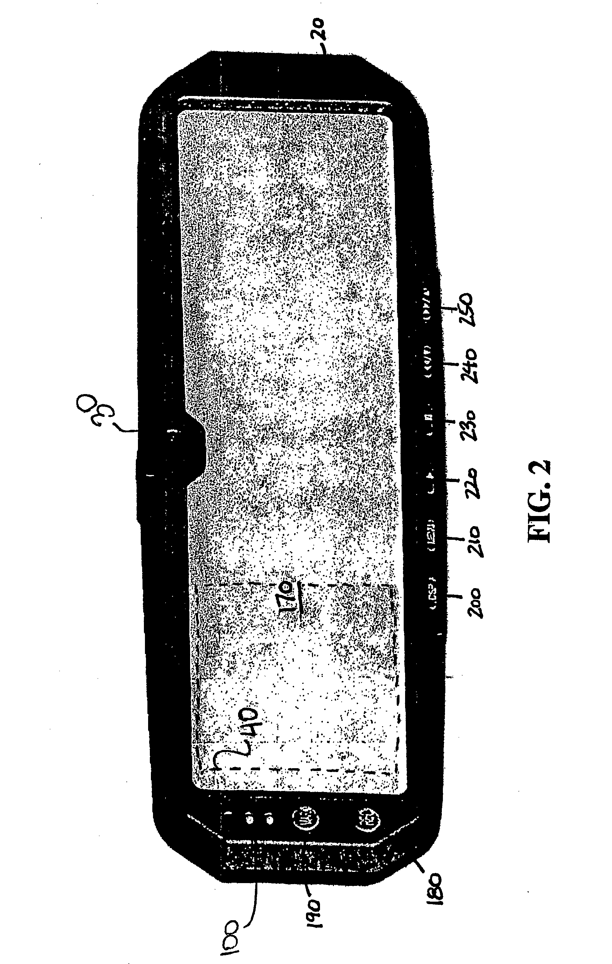

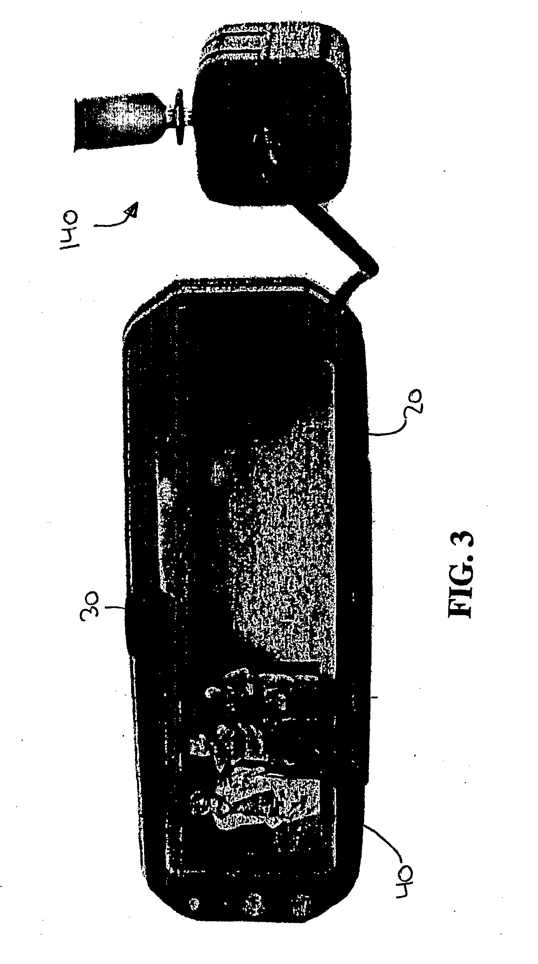

The monitor 40 is mounted substantially behind the mirror 170 (see Figs. 2 and 3) and works in conjunction with the mirror 170 so that when the monitor 40 is turned on it is viewable through the mirror 170, and when it is turned off it is not visible. The monitor 40 may be operable to automatically turn off when the vehicle begins to move or when the vehicle's transmission is shifted into reverse or drive, so that the driver has full use of the mirror 170 while the vehicle is in motion. Alternatively, the monitor may be mounted adjacent to or only partially behind the mirror 170. One appropriate monitor for use as the video monitor 40 is a 3.5 inch diagonal, 640x480 TFT LCD monitor.

The electronics module 50 includes a number of electronic components, including components for receiving video signals from the video cameras 30,140 and for transmitting video signals to the monitor 40. The electronics module 50 also includes components operable to receive and execute instructions stored in internal memory. In one embodiment, for example, these instructions include menu instructions for setting operational modes and resolutions. These instructions may be updated by loading instructions into a memory card and then inserting that card into a port in the system 10.

The input and output connectors 110,120 are in connected to the module 50 for receiving electronic signals thereto and transmitting electronic signals therefrom. The input connectors 110 may include, for example, a connector for power, for the output from the speed detector 160, and for the output from the GPS antenna 150. The input connectors 110 may also include one or more connectors for receiving signals to trigger operation of the system. These triggers may include, for example, turning on the vehicle's siren and/or signal lights. The input connectors 110 may also include a connector for receiving the output of a second external camera, such as a rear-facing camera, and a connector for receiving the output of a second external microphone. The input connectors 110 may also include a port, such as a USB 2.0 port, to allow for directly accessing the memory 60 using a laptop or other computer. The output connectors 120 may include, for example, an audio/visual connector for transmitting audio/visual signals to an external monitor or recording device. Additionally or alternatively, any one or more of these physical connectors 110,120, may be replaced with wireless communication technology allowing the system 10 to wirelessly receive or transmit any of the aforementioned input or outputs. In one embodiment, the input and output connectors 110,120 are provided on an interface module or block which is not located on or integrated into the housing 20, but rather is located in a remote location, such as under the vehicle's dash, and operatively coupled with the module 50 by wire or wirelessly.

The module 50 may also include components for receiving audio signals from audio sources, such as the internal microphone 70, and for transmitting audio signals to the speaker 80. The module 50 may also include components for receiving wireless signals from one or more remote microphones, such as a wireless microphone worn by the officer. In this case, the module 50 may include an integrated 900MHz (or another suitable frequency allowed by law), spread spectrum, dual receiver capable remote microphone system with a nominal range of up to approximately 1000 feet.

The module 50 may also include an integrated GPS receiver connected to the GPS antenna 150. Utilizing the information provided by these components, the module 50 may mark recorded video with real-time position data. The system includes a "dead reckoning" function which works with GPS to allow for operation in shielded locations, such as underground garages.

The module 50 may also be connected to the speed detector 140, which may be a radar gun or other conventional speed detecting device, and operable to record speed information provided by the speed detector 140 along with the video images.

The memory 60 is in communication with the module 50 for receiving and storing the video, audio, and other data. One appropriate form of electronic memory for use as the memory 60 is a CF card form factor removable memory module, and one appropriate format for storing the data is MPEG 4 format. Other appropriate forms of electronic memory for use as the memory 60 include micro hard drives, laptop-type hard drives, and flash memory cards. As will be understood by those in the field, the amount of data storable in the memory 60 is dependent, at least in part, on the resolution utilized by the electronics module 50. It is contemplated, however, that the memory 60 may store approximately one hour of data per gigabyte of memory for high resolution, approximately two hours of data per gigabyte of memory for medium resolution, and approximately four hours of data per gigabyte of memory for low resolution.

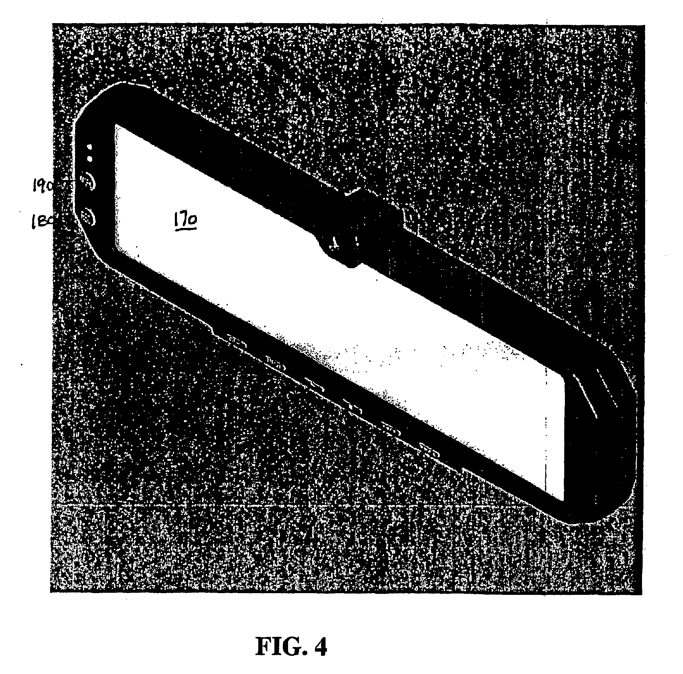

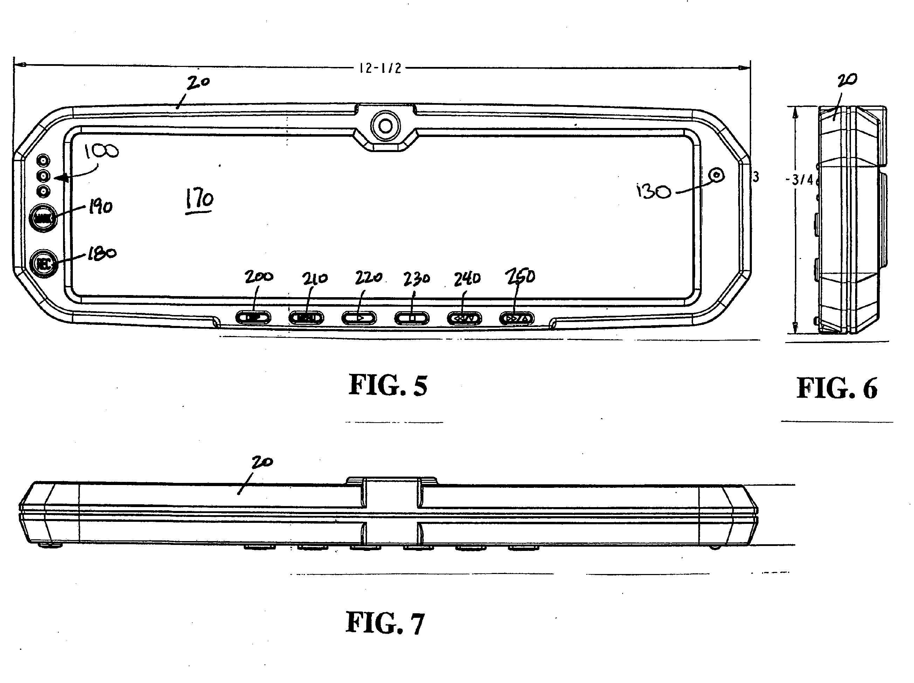

Referring also to Figs. 2-7, the input buttons 90 are mounted on the video housing 20 and allow for controlling various components and functions of the system 10. In one embodiment, these buttons 90 may include and operate as follows. A REC button 180 triggers recording in the mode shown in a menu displayed on the monitor 40. Pressing the REC button 180 during recording allows for cycling through the various night and day camera settings. Day and night recording modes may be set automatically using information from an on-board real-time clock or from a light sensor or from the camera 30. A red indicator LED 100 on the front of the unit and a red record LED on the back of the unit are both turned on when the system is recording. A MARK button 190 sets a place for the current GPS position in the video data. A DISP button 200 toggles through settings such as Video Monitor and Control illumination/indicators ON, Video Monitor OFF, Control illumination/indicators ON, and Video Monitor and Control illumination OFF. A Menu button 210 toggles the menu display on the monitor 40 and turns the monitor 40 ON if the display is OFF. A "Play" (large right-facing arrow) button 220 executes commands in Menu Mode and toggles Play/Pause in video playback mode. A "Stop" (square) button 230 acts to cancel the current function in Menu Mode, stops video in Playback Mode, and toggles preset Zoom positions in Record Mode. A REV/DOWN button 240 zooms the camera 30 towards Wide in Record Mode, moves down in Menu Mode, and moves in reverse in Playback Mode. A FWD/UP button 250 zooms the camera 40 towards TELE in Record Mode, moves up in Menu Mode, and moves forward in Playback Mode. Other buttons may include an auto zoom feature to assist in reading license plates on other vehicles.

The at least one infrared LED 130 is disposed in the mirror housing 20 and operable to provide infrared illumination inside the vehicle's passenger compartment so that the internal camera 30 can capture video images even when there is little visible light.

Power is supplied to the components of the video system 10 from the vehicle. The power provided is heavily filtered and regulated to avoid interference. The video system 10, using the particular components described herein, may require 4 amps from a 10 V to 13.8 V DC power supply.

The rear view mirror includes the mirror 170 mounted within the housing 20. One appropriate mirror 170 is constructed of mirror glass. One appropriate housing for use as the housing 20 is constructed of a polycarbonate plastic that is resistant to high impacts and high temperatures and is approximately between 12 inches and 14 inches long, 3 inches and 4 inches high, and 0.5 inches and 1.5 inches deep. The vehicle's conventional rear view mirror mount may be replaced by a stronger mount better able to support the weight of the mirror 170 and housing 20 and other components of the system 10. The input buttons 90, discussed above, may be mounted on a front or side surface of the housing 20. The mirror housing 20, and the housings of other components of the system, may include materials operable to shield against electrical or radio interference.

Additionally, the system 10 may be provided with a "stealth" mode in which the cameras 30,140 and the microphone 70 are active and recording, but the lights and indicators, such as the LED 100, are turned off, thereby making the system 10 appear to be dormant.

Additionally, the system 10 may provide "pre-event" recording in which the system 10 records constantly in a loop of a selected duration of time, such as thirty seconds or sixty seconds, so that when the operator pushes the REC button 180 the events occurring shortly prior to pushing the REC button 180 are also recorded and stored.

Additionally, various embodiments of the system 10 include any one or more of the following features. The system 10 requires entry of a password or code prior to accessing and changing operational settings. The system 10 requires use of a key to remove any removable memory components. The system 10 incorporates electronic watermarks into the recorded video images to prevent tampering or alteration. The system 10 allows for wirelessly downloading the contents of the memory 60 to a laptop or other computer. The system 10 allows for streaming the live video from the cameras 30,140, and possibly other inputs and/or outputs, via a high-speed wireless data network. The system 10 is operable to encode multiple video streams from four or more cameras simultaneously. The system 10 includes a remote control device for allowing a user to remotely control the operation of the system 10. The system 10 includes a temperature sensor and temperature indicator operable to detect and warn the user if the system 10 is at risk of malfunction or damage due to an ambient temperature that is too high or too low for proper operation, such as may easily occur in a vehicle on a very hot or very cold day. The housing 20, and possibly the housings of other components of the system 10, is vented to dissipate heat, and may include other passive or active features to moderate temperature, especially in relatively extreme environments.

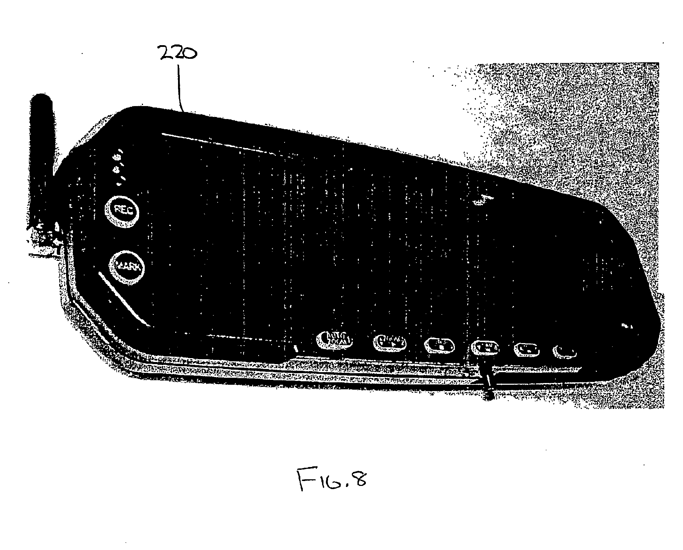

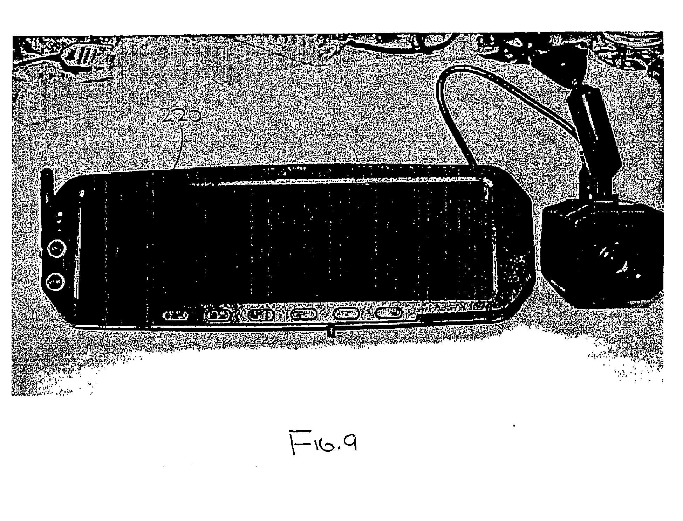

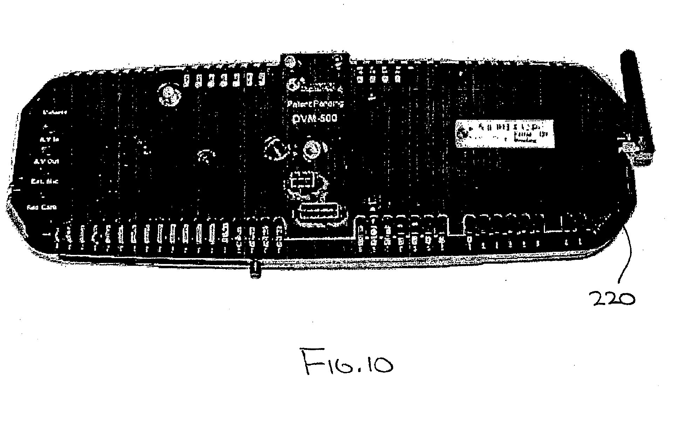

Referring also to Figs. 8-10, a second implementation of the system 10 is shown which is somewhat different in appearance than the implementation shown in Figs. 2-7, particularly with regard to the housing 220 and the layout of certain components thereabout, but which is otherwise substantially similar in functionality.

From the preceding discussion, it will be apparent that the present invention is both inexpensive to manufacture and easy to use, especially when compared to current vehicle video systems. The video system of the present invention is fully integrated into a small, easily installable and replaceable package that requires minimal space inside the vehicle. Thus, it replaces several single-purpose devices with a multifunction device that requires the same or less space in the vehicle. Moreover, the video system includes novel features and/or capabilities not present in currently available systems. Those skilled in the art will perceive additional significant improvements, changes, and modifications.

Having thus described the invention, what is claimed as new and desired to be protected by Letters Patent includes the following:

## Claims

1. A video system (10) for a vehicle comprising:
a rear view mirror housing (20);
a mirror (170) mounted in the rear view mirror housing (20) and disposed in the field of view of a driver of the vehicle;
a video camera (30) for capturing video signals indicative of video images;
a central control unit (50 mounted within the housing (20) and including a processor for receiving the video signals from the video camera (30) and a solid state memory (60) for storing the video signals upon receipt of the signals by the central control unit (50) and from the video camera (30);
a location determining device for determining a location of the vehicle when the video images are captured; and
a display monitor (40) mounted in the rear view mirror housing (20) substantially behind the mirror (170), the display monitor (40) being in operative communication with the video camera (30), and the mirror (170) and the display monitor (40) being configured so that the video images are viewable through the mirror (170) when the display monitor (40) is displaying the video images captured by the video camera (30), **characterized by**:
the system (10) being configured to associate at least some of the video signals with a location of the vehicle when the video signals were recorded and to mark stored video signals with the associated location.

2. The video system (10) of claim 1, further including an external video camera (140) for capturing video signals indicative of video images and mounted outside of the rear view mirror housing (20), wherein the central control unit (50) is further operable to store at least a portion of the video images captured by the external video camera (140) along with the location of the vehicle when the at least a portion of the video images were captured.

3. The video system (10) of claim 1, further including an internal microphone (70) operable to capture audio signals, wherein the central control unit (50) is further operable to record at least a portion of the audio signals along with the at least a portion of the video images.

4. The video system (10) of claim 1, further including a wireless microphone receiver for receiving audio signals from a remotely located microphone, wherein the central control unit (50) is further operable to record at least a portion of the audio signals along with the at least a portion of the video images.

5. The video system (10) of claim 1, wherein the memory (60) is selectively removable from and installable into the rear view mirror housing (20).

6. The video system (10) of claim 1, further including a speed detector (160) operable to determine speed information, wherein the central control unit (50) is further operable to record the speed information along with the at least a portion of the video images.

7. The video system (10) of claim 1, further including at least one infrared light source (130) mounted in the rear view mirror housing (20) for providing infrared illumination.

8. The video system (10) of claim 1, the central control unit (50) further operable to incorporate an electronic watermark in the recorded at least a portion of the video images.

9. The video system (10) of claim 4, further including a trigger mechanism operable, in response to activation of a signal light on the vehicle, to cause the central control unit (50) to record the at least a portion of the video images captured by the video camera (30) and (140) along with the location of the vehicle when the at least a portion of the video images were captured.

10. The video system (10) of claim 1, further including a wireless communication mechanism operable to allow for wirelessly downloading the contents of memory (60) to a an external computer.

11. The video system (10) of claim 10, wherein the system (10) is configured to stream a live video signal to a remote location from the video camera (30).

12. The video system (10) of claim 1, wherein the system (10) is configured to receive a password or code prior to activation of the system (10).

13. The video system (10) of claim 1, the system (10) including at least one software component for implementing the functionality of the system (10), wherein said at least one software component of said system is upgradeable while said system (10) is located in the field as during normal use of the system (10).

## Patentansprüche

1. Videosystem (10) für ein Fahrzeug, umfassend:
ein Rückspiegelgehäuse (20);
einen Spiegel (170), der in dem Rückspiegelgehäuse (20) montiert und in dem Bildfeld eines Fahrers des Fahrzeugs angeordnet ist;
eine Videokamera (30) zum Aufnehmen von Videobilder-indikativen Videosignalen;
eine zentrale Steuereinheit (50), die in dem Gehäuse (20) montiert ist und einen Prozessor zum Empfangen der Videosignale von der Videokamera (30) und einen Festkörperspeicher (60) zum Speichern der Videosignale bei Empfang der Signale durch die zentrale Steuereinheit (50) und von der Videokamera (30) enthält;
eine Ortsbestimmungseinrichtung zur Bestimmung eines Ortes des Fahrzeugs, wenn die Videobilder aufgenommen werden; und
einen Bildschirm (40), der in dem Rückspiegelgehäuse (20) im Wesentlichen hinter dem Spiegel (170) montiert ist, wobei der Bildschirm (40) mit der Videokamera (30) in operativer Kommunikation steht und der Spiegel (170) und der Bildschirm (40) so konfiguriert sind, dass die Videobilder durch den Spiegel (170) sichtbar sind, wenn der Bildschirm (40) die von der Videokamera (30) aufgenommenen Videobilder anzeigt, **dadurch gekennzeichnet, dass**
das System (10) konfiguriert ist, zumindest einige der Videosignale mit einem Ort des Fahrzeugs, als die Videosignale aufgezeichnet wurden, zu verknüpfen und die gespeicherten Videosignale mit dem verknüpften Ort zu markieren.

2. Videosystem (10) nach Anspruch 1, ferner enthaltend eine externe Videokamera (140) zum Aufnehmen von Videobilder-indikativen Videosignalen, die außerhalb des Rückspiegelgehäuses (20) montiert ist, wobei die zentrale Steuereinheit (50) ferner betreibbar ist, um zumindest einen Teil der durch die externe Videokamera (140) aufgenommenen Videobilder gemeinsam mit dem Ort des Fahrzeugs, als der zumindest eine Teil der Videobilder aufgenommen wurde, zu speichern.

3. Videosystem (10) nach Anspruch 1, ferner enthaltend ein internes Mikrophon (70), das betreibbar ist, um Audiosignale aufzunehmen, wobei die zentrale Steuereinheit (50) ferner betreibbar ist, um zumindest einen Teil der Audiosignale gemeinsam mit dem zumindest einen Teil der Videobilder aufzuzeichnen.

4. Videosystem (10) nach Anspruch 1, ferner enthaltend einen drahtlosen Mikrophonempfänger zum Empfangen von Audiosignalen von einem fern angeordneten Mikrophon, wobei die zentrale Steuereinheit (50) ferner betreibbar ist, um zumindest einen Teil der Audiosignale gemeinsam mit dem zumindest einen Teil der Videobilder aufzuzeichnen.

5. Videosystem (10) nach Anspruch 1, wobei der Speicher (60) wahlweise aus dem Rückspiegelgehäuse (20) herausnehmbar und darin installierbar ist.

6. Videosystem (10) nach Anspruch 1, ferner enthaltend einen Geschwindigkeitsdetektor (160), der betreibbar ist, um Geschwindigkeitsinformation zu ermitteln, wobei die zentrale Steuereinheit (50) ferner betreibbar ist, um die Geschwindigkeitsinformation gemeinsam mit dem zumindest einen Teil der Videobilder aufzuzeichnen.

7. Videosystem (10) nach Anspruch 1, ferner enthaltend zumindest eine Infrarotlichtquelle (130), die in dem Rickspiegelgehäuse (20) zur Infrarotbeleuchtung montiert ist.

8. Videosystem (10) nach Anspruch 1, wobei die zentrale Steuereinheit (50) ferner betreibbar ist, um ein elektronisches Wasserzeichen in den aufgezeichneten mindestens einen Teil der Videobilder einzubauen.

9. Videosystem (10) nach Anspruch 4, ferner enthaltend eine Auslöseeinrichtung, die, als Reaktion auf die Aktivierung einer Siginalleuchte an dem Fahrzeug, betreibbar ist, um zu veranlassen, dass die zentrale Steuereinheit (50) den mindestens einen Teil der von der Videokamera (30) und (140) aufgenommenen Videobilder gemeinsam mit dem Ort des Fahrzeugs, als der mindestens eine Teil der Videobilder aufgenommen wurde, aufzeichnent.

10. Videosystem (10) nach Anspruch 1, ferner enthaltend eine drahtlose Kommunikationseinrichtung, die betreibbar ist, um drahtloses Herunterladen der Inhalte von Speicher (60) auf einen externen Computer zu ermöglichen.

11. Videosystem (10) nach Anspruch 10, wobei das System (10) konfiguriert ist, um ein Livevideosignal zu einem fernen Ort von der Videokamera (30) zu streamen.

12. Videosystem (10) nach Anspruch 1, wobei das System (10) konfiguriert ist, um ein Passwort oder einen Code vor Aktivierung des Systems (10) zu empfangen.

13. Videosystem (10) nach Anspruch 1, wobei das System (10) zumindest eine Softwarekomponente zur Implementierung der Funktionalität des Systems (10) enthält, wobei die zumindestens eine Softwarekomponente des Systems upgrade-fähig ist während sich das System (10) in dem Bereich wie während des formalen Gebrauches des Systems (10) befindet.

## Revendications

1. Système vidéo (10) pour un véhicule, comprenant :
un logement de rétroviseur (20) ;
un miroir (170) monté dans le logement de rétroviseur (20) et disposé dans le champ de vision d'un conducteur du véhicule ;
une caméra vidéo (30) pour capturer des signaux vidéo indicatifs d'images vidéo ;
une unité de commande centrale (50) montée à l'intérieur du logement (20) et comprenant un processeur pour recevoir les signaux vidéo de la caméra vidéo (30) et une mémoire à semi-conducteurs (60) pour stocker les signaux vidéo lors de la réception des signaux par l'unité de commande centrale (50) et depuis la caméra vidéo (30) ;
un dispositif déterminateur de position pour déterminer une position du véhicule lorsque les images vidéo sont capturées ; et
un écran d'affichage (40) monté dans le logement du rétroviseur (20) sensiblement derrière le miroir (170), l'écran d'affichage (40) étant en communication opérationnelle avec la caméra vidéo (30), et le miroir (170) et l'écran d'affichage (40) étant configurés de telle sorte que les images vidéo peuvent être visionnées à travers le miroir (170) lorsque l'écran d'affichage (40) affiche les images vidéo capturées par la caméra vidéo (30), **caractérisé en ce que** :
le système (10) est configuré pour associer au moins une certains des signaux vidéo à une position du véhicule lorsque les signaux vidéo ont été enregistrés et pour repérer les signaux vidéo stockés avec la position associée.

2. Système vidéo (10) selon la revendication 1, comprenant en outre une caméra vidéo externe (140) pour capturer des signaux vidéo indicatifs d'images vidéo et montée à l'extérieur du logement de rétroviseur (20), dans lequel l'unité de commande centrale (50) est en outre utilisable pour stocker au moins une partie des images vidéo capturées par la caméra vidéo externe (140) ainsi que la position du véhicule lorsque l' au moins une partie des images vidéo ont été capturées.

3. Système vidéo (10) selon la revendication 1, comprenant en outre un microphone interne (70) utilisable pour capturer les signaux audio, dans lequel l'unité de commande centrale (50) est en outre utilisable pour enregistrer au moins une partie des signaux audio ainsi que l'au moins une partie des images vidéo.

4. Système vidéo (10) selon la revendication 1, comprenant en outre un récepteur de microphone sans fil pour recevoir les signaux audio d'un microphone positionné à distance, dans lequel l'unité de commande centrale (50) est en outre utilisable pour enregistrer au moins une partie des signaux audio ainsi que l'au moins une partie des images vidéo.

5. Système vidéo (10) selon la revendication 1, dans lequel la mémoire (60) peut être sélectivement enlevée du logement de rétroviseur (20) et installée dans celui-ci.

6. Système vidéo (10) selon la revendication 1, comprenant en outre un détecteur de vitesse (160) utilisable pour déterminer des informations de vitesse, dans lequel l'unité de commande centrale (50) est en outre utilisable pour enregistrer les informations de vitesse en conjugaison avec l'au moins une partie des images vidéo.

7. Système vidéo (10) selon la revendication 1, comprenant en outre au moins une source de lumière infrarouge (130) montée dans le logement de rétroviseur (20) pour fournir un éclairage infrarouge.

8. Système vidéo (10) selon la revendication 1, l'unité de commande centrale (50) étant en outre utilisable pour insérer un filigrane électronique dans l'au moins une partie enregistrée des images vidéo.

9. Système vidéo (10) selon la revendication 4, comprenant en outre un mécanisme déclencheur utilisable, en réponse à l'activation d'un feu de signalisation du véhicule, pour faire enregistrer par l'unité de commande centrale (50) l'au moins une partie des images vidéo capturées par la caméra vidéo (30) et (140) en conjugaison avec la position du véhicule lorsque l'au moins une partie des images vidéo ont été capturées.

10. Système vidéo (10) selon la revendication 1, comprenant en outre un mécanisme de communication sans fil utilisable pour permettre le téléchargement sans fil du contenu de la mémoire (60) vers un ordinateur externe.

11. Système vidéo (10) selon la revendication 10, dans lequel le système (10) est configuré pour diffuser en continu un signal vidéo en direct vers une position distante depuis la caméra vidéo (30).

12. Système vidéo (10) selon la revendication 1, le système (10) étant configuré pour recevoir un mot de passe ou un code avant l'activation du système (10).

13. Système vidéo (10) selon la revendication 1, le Système (10) comprenant au moins une composante logicielle pour mettre en oeuvre la fonctionnalité du système (10), ladite au moins une composante logicielle dudit système pouvant être mise à niveau alors que ledit système (10) se trouve dans le champ comme au cours de l'utilisation normale du système (10).
